# EUROPÄISCHE PATENTSCHRIFT

(11) **EP 0 677 412 B1**
(45) Veröffentlichungstag und Bekanntmachung des Hinweises auf die Patenterteilung: **14.01.1998**
(21) Anmeldenummer: 95102376.1
(22) Anmeldetag: 21.02.1995
(51) Int. Cl.: B60K 1/04

(54) **Anordnung eines Antriebsaggregats in einem Elektrofahrzeug**
Arrangement of a propulsion unit in an electrical vehicle
Agencement d'un ensemble d'entraînement dans un véhicule électrique

(30) Priorität: 12.04.1994 DE 4412450
(43) Veröffentlichungstag der Anmeldung: 18.10.1995
(73) Patentinhaber: DAIMLER-BENZ AKTIENGESELLSCHAFT, 70567 Stuttgart (DE)
(72) Erfinder: Riemer, Bernd, Ing., D-70374 Stuttgart (DE); Klaiber, Thomas, Dipl.-Ing., D-71384 Weinstadt (DE)

(56) Entgegenhaltungen:
- EP-A- 0 547 953
- DE-A- 2 644 666
- US-A- 4 365 681
- US-A- 5 193 635
- US-A- 5 251 721
- PATENT ABSTRACTS OF JAPAN vol. 18 no. 23 (M-1541) ,14.Januar 1994 & JP-A-05 260611 (SANYO ELECTRIC) 8.Oktober 1993,

## Beschreibung

Die Erfindung betrifft eine Anordnung eines Antriebsaggregats in einem Elektrofahrzeug gemäß dem Oberbegriff des Hauptanspruchs.

Aus der US-PS 51 93 635 ist ein Fahrzeug, welches ein Brennstoffzellensystem und ein Elektrofahrmotor aufweist, bekannt. Bei dieser Anordnung ist das gesamte Brennstoffzellensystem, welches aus einem Reformer, dem Brennstoffzellen-Stack und zwei Kompressoren besteht, auf einem gemeinsamen Rahmen montiert und im Bereich des Fahrzeugschwerpunkts angeordnet.

Bei konventionellen Fahrzeugen besteht aber die Schwierigkeit, daß sich im Bereich des Fahrzeugschwerpunktes die Fahrgastzelle befindet, so daß es nicht möglich ist, ein komplettes Brennstoffzellensystem in dieser Position anzuordnen, ohne das Platzangebot für die Insassen erheblich zu beeinträchtigen.

Die Aufgabe der Erfindung besteht darin, eine Anordnung für ein Antriebsaggregat in einem Elektrofahrzeug zu schaffen, mit der zumindest empfindliche Komponenten des Antriebsaggregats vor Beschädigung geschützt werden, ohne den Bauraum für die Fahrgastzelle einzuschränken.

Die Aufgabe wird erfindungsgemäß durch die kennzeichnenden Merkmale des Patentanspruchs 1 gelöst.

Die Anordnung der Brennstoffzelle zwischen zwei mit Abstand voneinander angeordnete Längsträger weist den Vorteil auf, daß die Brennstoffzelle sowohl in Längs- als auch in Querrichtung vor Beschädigungen infolge eines Unfalles geschützt ist. Die Anordnung der Brennstoffzelle im Unterflurbereich des Fahrzeugs bietet zusätzlich noch den Vorteil, daß der Boden des Fahrgastraumes oberhalb der Längsträger ebenflächig ausgebildet werden kann und daß somit das Platzangebot für die Insassen in keinster Weise beeinträchtigt wird.

Durch die zusätzliche Anordnung zweier Querträger wird eine Art Sicherheitsbereich ausgebildet, so daß der Schutz für empfindliche Antriebskomponenten weiter verbessert werden kann. In diesem Sicherheitsbereich kann dann auch ein eventuell vorhandener Wasserstoffzwischenspeicher angeordnet werden.

Weitere Vorteile und Ausgestaltungen gehen aus den Unteransprüchen und der Beschreibung hervor. Die Erfindung ist nachstehend anhand einer Zeichnung näher beschrieben, wobei
- Fig. 1a: eine Prinzipdarstellung eines erfindungsgemäßen Aufbaus für ein Fahrzeug in einem vertikalen Längsschnitt,
- Fig. 1b: die Anordnung aus Fig. 1a in einem horizontalen Schnitt,
- Fig. 2a: ein zweites Ausführungsbeispiel einer erfindungsgemäßen Anordnung in einem vertikalen Längsschnitt und
- Fig. 2b: die Anordnung aus Fig. 2a in einem horizontalen Schnitt zeigt.

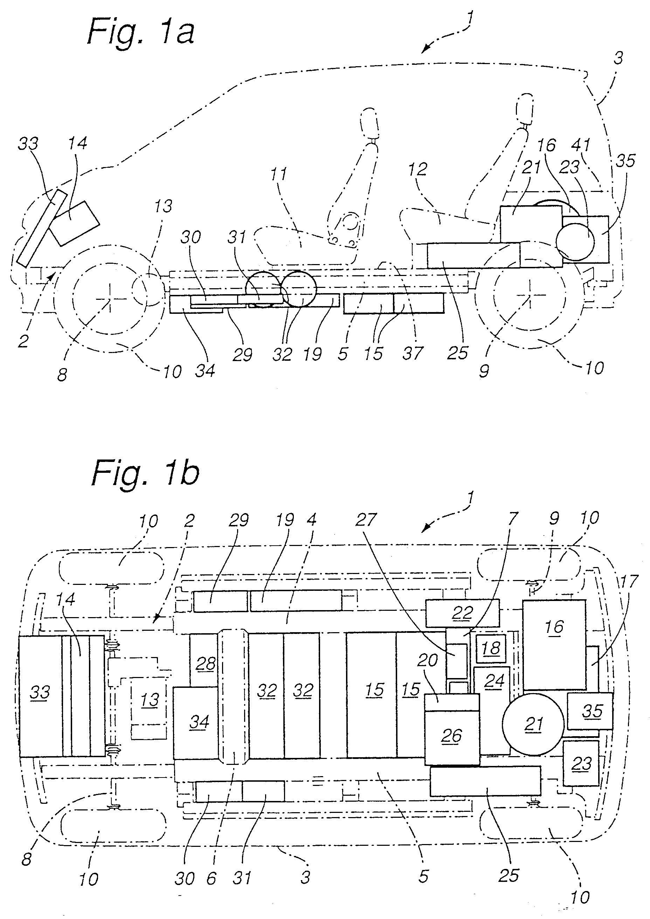

Das insgesamt mit 1 gekennzeichnte Fahrzeug aus Fig. 1 weist eine von einem Fahrzeugrahmen 2 getragene Karosserie 3 auf. Der Fahrzeugrahmen 2 umfaßt zwei Längsträger 4, 5 und zwei Querträger 6, 7. An den Längsträgern 4, 5 ist eine Vorderachse 8 und eine Hinterachse 9, an denen jeweils zwei Räder 10 angeordnet sind, angelenkt. Von dem Fahrzeugrahmen 2 werden außerdem zwei Vordersitze 11 und eine Rücksitzbank 12 gehalten. Zum Antrieb des Fahrzeugs ist an der Vorderachse ein Elektrofahrmotor 13, dessen Leistung mit Hilfe eines Stromstellers 14 beeinflußt werden kann, angeordnet. Die elektrische Energie für den Elektrofahrmotor 14 wird mit Hilfe eines Brennstoffzellensystems erzeugt. Das Brennstoffzellensystem besteht aus einem Brennstoffzellen-Stack 15, in dem eine Vielzahl von Einzelbrennstoffzellen integriert sind, einem Reformer 16, einem Brennstofftank 17 und einer Vielzahl von Zusatzaggregaten 18-35. Die Funktion des Brennstoffzellensystems, beispielsweise einer PEM-Brennstoffzelle mit Methanol-Reformer, ist allgemein bekannt und wird daher im folgenden nur noch kurz beschrieben.

Im Brennstofftank 17 gespeichertes Methanol und Wasser aus einem Wasserspeicher 18 werden in einem Verdampfer 19 in einen gasförmigen Zustand überführt und anschließend zum Reformer 16 geleitet. Im Reformer 16 wird dann aus dem Methanol/Wasserdampfgemisch unter Zufuhr von Wärme mit Hilfe eines katalytischen Brenners 20 im wesentlichen Wasserstoff, Kohlendioxid und Kohlenmonoxid gebildet. Zur Reduzierung des Kohlenmonoxidanteils kann zusätzlich ein CO-Oxidator 21 vorgesehen werden. Dieses H₂-haltige Brenngas wird anschließend mit Hilfe eines H₂-Kompressors 22 dem Brennstoffzellen-Stack 15 unter Druck zugeführt. Mittels eines weiteren Kompressors 23 mit zugehörigem Elektromotor 24 wird dem Brennstoffzellen-Stack zusätzlich unter Druck befeuchtete Luft zugeführt. Im Brennstoffzellen-Stack wird dann aus dem Wasserstoff und dem Sauerstoff elektrische Energie gewonnen, welche über den Stromsteller 14 zum Antrieb des Fahrzeugs 1 dem Elektrofahrmotor 13 zugeführt wird. Für den Betrieb des Brennstoffzellensystem können noch eine Vielzahl von weiteren Zusatzaggregaten, beispielsweise Ionentauscher 25, Luftfilter 26, Kondensatabscheider 27, Ausgleichsbehälter 28, Wasserpumpe 29, Reformatkühler 30, Reformer-Wärmetauscher 31, Wasserstoff-Zwischenspeicher 32, Brennstoffzellen-Kühler 33, Stromsteller 34 für elektrische Zusatzkomponenten oder Befeuchter 35 notwendig sein. Die Funktion dieser Zusatzaggregate wird als bekannt vorausgesetzt und daher nicht weiter beschrieben.

Um eine solche Vielzahl an Komponenten in einem Fahrzeug unterzubringen ist es vorteilhaft, wenn die Aggregate als separate Bauteile ausgeführt werden und somit auf die vorhandenen Einbauplätze verteilt werden können. Hierbei ist es besonders vorteilhaft, wenn wichtige oder besonders empfindliche Bauteile an einer geschützten Einbauposition angeordnet werden. Bei der beschriebenen Anordnung wird durch die geradlinig verlaufende Längs- und Querträger 4-7 ein Art Sicherheitsraum ausgebildet. In diesem Sicherheitsraum werden vorzugsweise das Brennstoffzellen-Stack 15 und der Wasserstoffzwischenspeicher 32 angeordnet. Der Reformer 16 , einschließlich zugehöriger Zusatzaggregate, und der Brennstofftank 17 sind im hinteren Bereich des Fahrzeugs untergebracht. Der Brennstofftank 17 ist wiederum aus Sicherheitsgründen zwischen den beiden Längsträgern 4, 5 hinter der Hinterachse 9 angeordnet. Der Reformer 16 kann dann im Bereich der Hinterachse 9 oberhalb der Längsträger 4, 5 und des Brennstofftanks 17 vorgesehen werden. Der Brennstoffzellen-Kühler 33 wird in bekannter Weise im Frontbereich des Fahrzeugs 1 angeordnet, so daß eine ausreichende Versorgung mit Kühlluft gewährleistet ist. Direkt hinter dem Brennstoffzellen-Kühler 33 kann dann der Stromsteller 14 für den Elektrofahrmotor 13 vorgesehen werden.

Weitere Zusatzaggregate können auf den noch freien Bauraum im gesamten Fahrzeug 1, beispielsweise auch im mittleren Fahrzeugbereich zwischen den Längsträgern 4, 5 und dem seitlichen Rahmenabschluß, verteilt werden. Vorzugsweise können hierbei alle Teile des Antriebsaggregats, die im mittleren Fahrzeugbereich angeordnet sind, in Unterflurbauweise ausgeführt werden. Dadurch kann der Boden in der Fahrgastzelle ebenflächig ausgebildet werden. Lediglich im vorderen und hinteren Fahrzeugbereich können auch Zusatzaggregate oberhalb der Längsträger angordnet werden. Dies führt lediglich dazu, daß sich im Heckbereich der Gepäckraumboden 41 auf einem höheren Niveau befindet.

Anstelle der gezeigten querliegenden Anordnung an der Vorderachse 8 kann der Elektrofahrmotor 13 selbstverständlich auch an der Hinterachse 9 oder in Längsrichtung angeordnet werden.

Außerdem können zwei radnahe Elektrofahrmotoren 13 an der Vorder- oder Hinterachse 8, 9 vorgesehen werden.

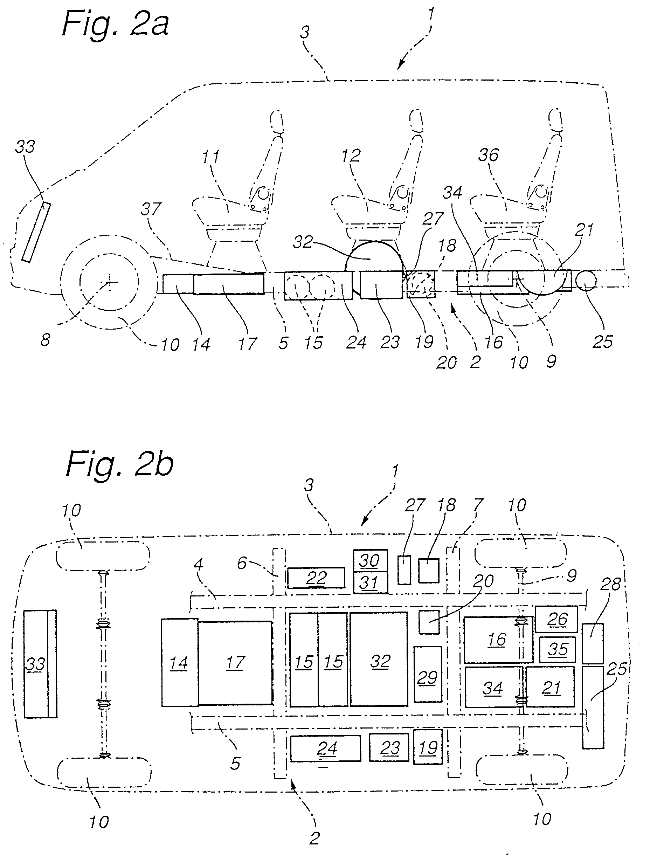

Fig. 2 zeigt eine ähnlich Anordnung für einen Minivan oder einen Transporter mit drei Sitzreihen 11, 12, 36. Hierbei sind gleiche Teile gegenüber Fig. 1 mit gleichen Bezugszeichen gekennzeichnet. Im Gegensatz zu Fig. 1 ist bei dieser Anordnung der Brennstofftank 17 im Bereich der Vordersitze 11 zwischen den Längsträgern 4, 5 angeordnet. Außerdem sind die Stromsteller 14, 34 nicht im Fahrzeugbug, sondern hinter der Vorderachse 8 und vor der Hinterachse 9, jeweils zwischen den Längsträgern 4, 5, vorgesehen. Bei dieser Anordnung ist zusätzlich auch der Reformer 16 und die im Fahrzeughinterteil gruppierten Zusatzaggregate im Unterflurbereich angeordnet, so daß hier der Boden der Fahrgastzelle 37 über den gesamten Bereich ebenflächig ausgebildet werden kann.

Bei den Unterfluranordnungen ist es möglich, die Antriebsaggregate in einer Wanne oder einem Hilfsrahmen zu montieren, wobei der Einbau von unten oder durch den Boden der Fahrgastzelle 37 erfolgen kann. Für die Montage beziehungsweise Wartung weist in diesem Fall der Boden der Fahrgastzelle 37 oder der Fahrzeugunterboden entsprechende Aussparungen oder Wartungsklappen auf.

Bei einem Brennstoffzellensystem ohne Reformer 16 kann der oder die Brennstofftanks 17 auch im Bereich des Fahrzeugdaches oder im Gepäckraum angeordnet werden.

## Patentansprüche

1. Anordnung eines Antriebsaggregats in einem Fahrzeug, welches zumindest einen Elektrofahrmotor, eine Brennstoffzelle und einen Brennstofftank aufweist, wobei die Brennstoffzelle an einer Tragkonstruktion des Fahrzeugbodens in einer Position zwischen der Vorder- und Hinterachse des Fahrzeugs gehalten ist,
**dadurch gekennzeichnet,**
daß die Tragkonstruktion von zwei mit Abstand voneinander angeordneten Längsträgern (4, 5), die geradlinig verlaufen und sich im wesentlichen über die gesamte Fahrzeuglänge erstrecken und zwei mit Abstand voneinander angeordneten Querträgern (6, 7), die geradlinig verlaufen und sich im wesentlichen über die gesamte Fahrzeugbreite erstrecken, gebildet ist, daß zumindest die Brennstoffzelle (15) im Unterflurbereich des Fahrzeugs (1) zwischen den Längs- und den Querträgern (4-7) angeordnet ist und daß für die Brennstoffzelle (15) benötigte Zusatzaggregate (18-35) im Unterflurbereich außerhalb der Längsträger (4, 5) zwischen den Querträgern (6, 7) angeordnet sind.

2. Fahrzeug nach Anspruch 1,
**dadurch gekennzeichnet,**
daß ein zusätzlicher Wasserstoff-Zwischenspeicher (32) ebenfalls im Unterflurbereich zwischen den Längs- und Querträgern (4-7) angeordnet ist.

3. Fahrzeug nach Anspruch 1,
**dadurch gekennzeichnet,**
daß der Brennstofftank (17) hinter dem hinteren Querträger (7) im Bereich zwischen den Längsträgern (4, 5) angeordnet ist.

## Claims

1. Arrangement of a drive unit in a vehicle, which drive unit comprises at least an electric traction motor, a fuel cell and a fuel tank, the fuel cell being supported on a supporting structure of the vehicle floor in a position between the front and rear axles of the vehicle, characterized in that the supporting structure is formed by two longitudinal beams (4, 5) fitted at a distance from one another, which extend linearly essentially over the entire length of the vehicle, and two transverse beams (6, 7) which are arranged at a distance from one another and extend linearly essentially over the entire width of the vehicle, in that at least the fuel cell (15) is arranged in the underfloor region of the vehicle (1) between the longitudinal beams and the transverse beams (4 - 7), and in that auxiliary units (18 - 35) which are required for the fuel cell (15) are arranged in the underfloor region outside the longitudinal beams (4, 5) between the transverse beams (6, 7).

2. Vehicle according to Claim 1, characterized in that an additional hydrogen temporary reservoir (32) is also fitted in the underfloor region between the longitudinal and transverse beams (4 - 7).

3. Vehicle according to Claim 1, characterized in that the fuel tank (17) is fitted behind the rear transverse beam (7) in the region between the longitudinal beams (4, 5).

## Revendications

1. Agencement dans un véhicule d'un ensemble d'entraînement comportant au moins un moteur électrique de déplacement, une pile à combustible et un réservoir de combustible, la pile à combustible étant maintenue sur une construction de support du plancher du véhicule dans une position entre l'essieu avant et l'essieu arrière du véhicule,
caractérisé en ce que
la construction de support est formée par deux longerons (4, 5) placés à distance l'un de l'autre, qui ont une forme rectiligne et s'étendent essentiellement sur toute la longueur du véhicule, ainsi que par deux traverses (6, 7) placées à distance l'une de l'autre, qui ont une forme rectiligne et s'étendent essentiellement sur toute la largeur du véhicule, qu'au moins la pile à combustible (15) est disposée dans la zone sous le plancher du véhicule (1) entre les longerons et les traverses (4 - 7) et que les appareils annexes (18 - 35) nécessaires à la pile à combustible (15) sont disposés dans la zone sous le plancher, à l'extérieur des longerons (4, 5), entre les traverses (6, 7).

2. Véhicule selon la revendication 1, caractérisé en ce qu'un accumulateur intermédiaire d'hydrogène (32), prévu en plus, est disposé egalement dans la zone sous le plancher entre les longerons et les traverses (4 - 7).

3. Véhicule selon la revendication 1, caractérisé en ce que le réservoir de combustible (17) est disposé derrière la traverse arrière (7) dans la zone entre les longerons (4, 5).
